# EUROPEAN PATENT APPLICATION

(11) **EP 4 561 207 A1**
(43) Date of publication of application: **28.05.2025**
(21) Application number: 23842395.8
(22) Date of filing: 20.07.2023
(51) Int. Cl.: H04W 68/00

(54) **PAGING RESPONSE METHOD AND APPARATUS**

(30) Priority: 22.07.2022 CN 202210875830
(71) Applicant: Spreadtrum Communications (Shanghai) Co., Ltd., Shanghai 201203 (CN)
(72) Inventor: XU, Min, Shanghai 201203 (CN)
(74) Representative: Mewburn Ellis LLP
(86) International application number: PCT/CN2023/108395
(87) International publication number: WO 2024/017333

(57) **Abstract**

The present disclosure discloses a paging response method and apparatus, which are applied to the technical field of communications. The method includes: receiving a paging message, where the paging message contains first indication information, and the first indication information indicates mobile terminated-small data transmission (MT-SDT); and transmitting a paging response message on a resource other than an SDT resource. This method is beneficial to saving resources for paging response.

## Description

### TECHNICAL FIELD

The present disclosure relates to the field of communication technology, and in particular to a paging response method and apparatus.

### BACKGROUND

In the 3rd generation partnership project (3GPP) new radio (NR) protocol, air interface states of terminal devices include: a radio resource control_idle (RRC_idle) state, an RRC_connected state, and an RRC_inactive state. When the terminal device is in the RRC_idle state, the terminal device is not connected to a base station, and the terminal device needs to regularly initiate location updates, cell selection and reselection, receive paging, etc. When the terminal device is in the RRC_connected state, the terminal device is connected to a network, the base station may perform relevant configurations of a radio bearer (RB) and a physical layer, and the base station can schedule uplink and downlink data for the terminal device. When the terminal device is in the RRC_inactive state, the terminal device moves within a radio access network-based notification area (RNA) without notifying the base station, the terminal device can retain certain configurations (for example, retaining packet data convergence protocol (PDCP), service data adaptation protocol (SDAP) and other configurations), and in the case where the base station needs to schedule the terminal device or the terminal device has data to be transmitted, the terminal device needs to migrate to the RRC_connected state and restore to retained configurations for data transmission.

Small data transmission (SDT) means that data can be transmitted or received in the RRC_inactive state without migrating to the RRC_connected state. For example, SDT indication information can be added to a paging message, and the SDT indication information indicates execution of SDT. However, it has not yet been determined on which resource the paging message will be responded.

### SUMMARY

The present disclosure discloses a paging response method and apparatus, which are beneficial to saving resources for paging response.

In a first aspect, the embodiments of the present disclosure provide a paging response method. The method includes: receiving a paging message, and transmitting a paging response message on a resource other than a small data transmission (SDT) resource, where the paging message contains first indication information, and the first indication information indicates execution of mobile terminated-SDT (MT-SDT).

In an optional embodiment, the method further includes: receiving second indication information, where the second indication information indicates that paging response is supported on the resource other than the SDT resource. A specific implementation manner of transmitting the paging response message on the resource other than the SDT resource is transmitting the paging response message on the resource other than the SDT resource according to the second indication information.

In an optional embodiment, a specific implementation manner of transmitting the paging response message on the resource other than the SDT resources is transmitting the paging response message on the resource other than the SDT resource in a case where a preset condition is met.

In an optional embodiment, the preset condition includes: no available SDT resource; and/or no uplink data to be transmitted.

In an optional embodiment, no available SDT resource includes that: no SDT resource is configured by a network, or a configured SDT resource is unavailable.

In an optional embodiment, the method further includes: determining whether to transmit the paging response message on the SDT resource in a case where there is uplink data to be transmitted.

In an optional embodiment, after transmitting the paging response message on the resource other than the SDT resource, the method further includes: remaining in a radio resource control_inactive (RRC_inactive) state for data transmission or starting an SDT timer.

In an optional embodiment, the method further includes: receiving third indication information, where the third indication information indicates an SDT search space; receiving scheduling information on an SDT resource belonging to the SDT search space; and transmitting uplink data and/or receiving downlink data on a resource indicated by the scheduling information.

In an optional embodiment, the second indication information is contained in a paging message, a system message, or an RRCRelease message.

In an optional embodiment, the resource other than the SDT resource includes: a 4-step random access (RA) resource or a 2-step RA resource.

In a second aspect, the embodiments of the present disclosure provide another paging response method. The method includes: transmitting a paging message, and receiving a paging response message on a resource other than an SDT resource, where the paging message contains first indication information, and the first indication information indicates execution of MT-SDT.

In an optional embodiment, the method further includes: transmitting second indication information, where the second indication information indicates that paging response is supported on the resource other than the SDT resource.

In an optional embodiment, a specific implementation manner of receiving the paging response message on the resource other than the SDT resource is receiving the paging response message on the resource other than the SDT resource in a case where there is no available SDT resource.

In an optional embodiment, no available SDT resource includes that: no SDT resource is configured by a network, or a configured SDT resource is unavailable.

In an optional embodiment, the method further includes: transmitting third indication information, where the third indication information indicates an SDT search space; transmitting scheduling information on an SDT resource belonging to the SDT search space; and receiving uplink data and/or transmitting downlink data on the resource indicated by the scheduling information.

In an optional embodiment, a specific implementation manner of transmitting the third indication information is transmitting the third indication information in a case where no SDT resource is configured.

In an optional embodiment, the second indication information is contained in a paging message, a system message, or an RRCRelease message.

In an optional embodiment, the resource other than the SDT resource includes: a 4-step RA resource or a 2-step RA resource.

In a third aspect, the embodiments of the present disclosure provide another paging response method. The method includes: receiving a paging message, where the paging message contains fourth indication information, and the fourth indication information indicates execution of MT-SDT and indicates that paging response is supported on the resource other than the SDT resource; and transmitting a paging response message on the resource other than the SDT resource according to the fourth indication information.

In a fourth aspect, the embodiments of the present disclosure provide another paging response method. The method includes: transmitting a paging message, and receiving a paging response message on a resource other than an SDT resource. The paging message contains fourth indication information, and the fourth indication information indicates execution of MT-SDT and indicates that paging response is supported on the resource other than the SDT resource.

In a fifth aspect, the embodiments of the present disclosure provide a communication device, which includes a unit for implementing the method described in the first aspect or the second aspect.

In a sixth aspect, the embodiments of the present disclosure provide another communication device including a processor. The processor is configured to execute the method described in the first aspect or the second aspect.

In an optional implementation, the communication device may further include a memory. The memory is configured to store a computer program. The processor is specifically configured to call the computer program from the memory to execute the method described in the first aspect or the second aspect.

In a seventh aspect, the embodiments of the present disclosure provide a chip for executing the method described in the first aspect or the second aspect.

In an eighth aspect, the embodiments of the present disclosure provide a chip module, which includes a communication interface and a chip. The communication interface is configured for internal communication within the chip module, or for the chip module to communicate with an external device. The chip is configured to execute the method described in the first aspect or the second aspect.

In a ninth aspect, the embodiments of the present disclosure provide a computer-readable storage medium, where the computer-readable storage medium stores a computer program, the computer program contains program instructions, and when the program instructions are executed by a communication device, the communication device executes the method described in the first aspect or the second aspect.

In a tenth aspect, the embodiments of the present disclosure provide a computer program product including a computer program or instructions, and when the computer program or instructions are executed on a computer, the computer executes the method described in the first aspect or the second aspect.

In the embodiments of the present disclosure, transmitting the paging response message on the resource other than the SDT resource is beneficial to saving resources for paging response.

### BRIEF DESCRIPTION OF THE DRAWINGS

FIG. 1 is a schematic architecture diagram of a communication system provided in embodiments of the present disclosure.
FIG. 2 is a schematic flow chart of 4-step random access (RA) provided in embodiments of the present disclosure.
FIG. 3 is a schematic flow chart of 2-step RA provided in embodiments of the present disclosure.
FIG. 4 is a schematic flow chart of a paging response method provided in embodiments of the present disclosure.
FIG. 5 is a schematic flow chart of another paging response method provided in embodiments of the present disclosure.
FIG. 6 is a schematic flow chart of yet another paging response method provided in embodiments of the present disclosure.
FIG. 7 is a schematic flow chart of yet another paging response method provided in embodiments of the present disclosure.
FIG. 8 is a schematic structural diagram of a communication device provided in embodiments of the present disclosure.
FIG. 9 is a schematic structural diagram of another communication device provided in embodiments of the present disclosure.
FIG. 10 is a schematic structural diagram of a chip module provided in embodiments of the present disclosure.

### DETAILED DESCRIPTION

It may be understood that, the terms "first", "second", and the like used in embodiments of the present disclosure are used to distinguish different objects rather than describe a particular order. The term "at least one" in embodiments of the disclosure refers to one or multiple or a plurality of, and the "multiple" or "a plurality of" refers to two or more. The term "and/or" in embodiments of the present disclosure describes an association relationship between associated objects, and indicates that there may be three relationships, for example, *A* and/or *B* may mean *A* alone, both *A* and *B* exist, and *B* alone. *A* and *B* each may be a singular from or a plural form. The character "/" herein can indicate that associated objects are in an "or" relationship. In addition, the symbol "/" may represent a divisor, i. e., perform a division operation.

The term "at least one (item) of" or the like in embodiments of the present disclosure refers to any combination of these items, including any combination of a single item or multiple items. For example, at least one (item) of *a, b,* or c can represent the following seven cases: *a*; *b*; *c*; *a* and *b; a and* c; *b and* c; *a, b,* and *c*. *a, b,* and c each may be an element or a set including one or more elements.

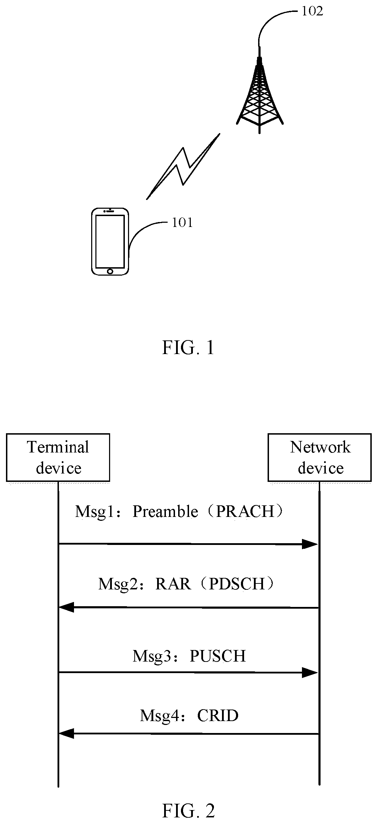

Refer to FIG. 1, which is a schematic architecture diagram of a communication system provided in embodiments of the present disclosure. The communication system may include, but is not limited to, a terminal device and a network device. The number and form of devices as illustrated in FIG. 1 are used for example and do not constitute a limitation on the embodiments of the present disclosure. In actual applications, two or more terminal devices and network devices may be included. The communication system as illustrated in FIG. 1 includes a terminal device 101 and a network device 102 as an example.

The terminal device in the embodiments of the present disclosure is a device with wireless transceiver function, which can be called terminal, user equipment (UE), mobile station (MS), mobile terminal (MT), access terminal device, Internet of Things terminal device, vehicle-mounted terminal device, industrial control terminal device, UE unit, UE station, mobile station, remote station, remote terminal device, mobile device, UE terminal device, wireless communication device, UE agent or UE device, etc. The terminal device may be fixed or mobile. It may be noted that, the terminal device can support at least one wireless communication technology, such as long time evolution (LTE), new radio (NR), wideband code division multiple access (WCDMA), etc. For example, the terminal device may be a mobile phone, a tablet computer (pad), a desktop computer, a laptop computer, an all-in-one computer, a vehicle-mounted terminal, a virtual reality (VR) terminal device, an augmented reality (AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device with wireless communication functions, a computing device or other processing device connected to a wireless modem, a wearable device, a terminal device in a future mobile communication network, a terminal device in a future evolved public land mobile network (PLMN), etc. In some embodiments of the present disclosure, the terminal device may also be a device with transceiver functions, such as a chip module. The chip module may include a chip and may also include other discrete devices. In the embodiments of the present disclosure, the specific technology and specific device form used by the terminal device are not limited.

In the embodiments of the present disclosure, the network device is a device that can provide wireless communication functions for the terminal device. The network device may be an access network (AN) device, or a satellite. The AN device may be a radio access network (RAN) device. The access network device can support at least one wireless communication technology, such as LTE, NR, WCDMA, etc. For example, the access network device may include but is not limited to: a generation nodeB (gNB), an evolved node B (eNB), a radio network controller (RNC), a node B (NB), a base station controller (BSC), a base transceiver station (BTS), a home base station (for example, home evolved node B, or home node B (HNB)), a baseband unit (BBU), a transmission and reception point (TRP), a transmitting point (TP), and a mobile switching center in the 5th-generation (5G), etc. The network device may also be a wireless controller, a centralized unit (CU) and/or a distributed unit (DU) in a cloud radio access network (CRAN) scenario, or the access network device may be a relay station, an access point, a vehicle-mounted device, a terminal device, a wearable device, an access network device in future mobile communications or an access network device in a future evolved PLMN, etc. In some embodiments, the network device may also be a device that provides wireless communication functions for terminal devices, such as a chip module. For example, the chip module may include a chip and may also include other discrete devices. In the embodiments of the present disclosure, the specific technology and specific device form adopted by the network device are not limited.

It may be noted that, the technical solutions of the embodiments of the present disclosure can be applied to various communication systems, for example: 5G mobile communication system, and 5G NR system. Optionally, the methods of the embodiments of the present disclosure are also applicable to various future communication systems, such as the 6th-generation (6G) system or other communication networks.

It may be understood that, the communication system described in the embodiments of the present disclosure is to more clearly illustrate the technical solutions of the embodiments of the present disclosure, and does not constitute a limitation on the technical solutions provided by the embodiments of the present disclosure. Those skilled in the art can know that, with the evolution of the system architecture and the emergence of new service scenarios, the technical solutions provided in the embodiments of the present disclosure are also applicable to similar technical problems.

In order to better understand the technical solutions provided by the embodiments of the present disclosure, the technical terms involved in the embodiments of the present disclosure are first introduced.

### (1) Random access (RA)

If a terminal device needs to initiate data transmission in a non-RRC_connected state, the terminal device needs to migrate to an RRC_connected state through RA. RA refers to a process in which a user transmits an RA preamble to start to try to access a network to establish a basic signaling connection with the network. A preamble can be used for a network device to identify the identity of the terminal device during RA, or for the network device to identify a device that initiates RA, and can also be used for other purposes, which are not limited in the embodiments of the present disclosure. RA includes 4-step RA and 2-step RA. 4-step RA may include four messages: message 1 (also known as Msg1), message 2 (also known as Msg2), message 3 (also known as Msg3), and message 4 (also known as Msg4). The schematic flow chart of 4-step RA is illustrated in FIG. 2.

First, the terminal device transmits Msg1 on a physical random access channel occasion (RO), where Msg1 contains a preamble.

Second, after receiving the preamble, the network device generates random access response (RAR) for the preamble and transmits the RAR (RAR can also be called Msg2). The RAR is carried on a physical downlink shared channel (PDSCH), where the PDSCH is scheduled by a physical downlink control channel (PDCCH), and the PDCCH is scrambled with a random access radio network temporary identifier (RA-RNTI).

RAR includes one or more of the following: a timing advance command (TAC), uplink grant, and a temporary cell radio network temporary identifier (TC-RNTI). The TAC carries TA information. The uplink grant carries scheduling information for the terminal device to transmit Msg3. The terminal device without a C-RNTI can receive Msg4 through a TC-RNTI.

The first two steps of RA mainly realize uplink time synchronization. Multiple terminal devices may select the same RO and preamble to initiate RA, which may cause contention. The last two steps of RA can perform contention resolution and assign a unique and legal identity to the terminal device for subsequent data transmission.

After transmitting Msg1, the terminal device monitors a PDCCH scrambled by an RA-RNTI to receive RAR. After receiving the RAR, the terminal device transmits Msg3, where Msg3 is carried on a physical uplink shared channel (PUSCH). The terminal device in a non-RRC_connected state may transmit an RRC common control channel (CCCH) message.

Finally, after the network device receives the PUSCH sent by the terminal device, if the terminal device wins contention resolution, the network device generates a response to the PUSCH (i.e., Msg4), where Msg4 is carried on a PDSCH. The identity used to uniquely identify the terminal device (contention resolution identity (CRID)) is carried in Msg4 to indicate the terminal device that wins contention resolution, and other terminal devices that did not win contention resolution will re-initiate RA. If the PDSCH received by the terminal device in Msg4 is scrambled by a TC-RNTI specified in an RAR message, when a CRID successfully decoded matches information in the CCCH sent by Msg3, the terminal device may determine that RA is successful and convert the TC-RNTI into a C-RNTI.

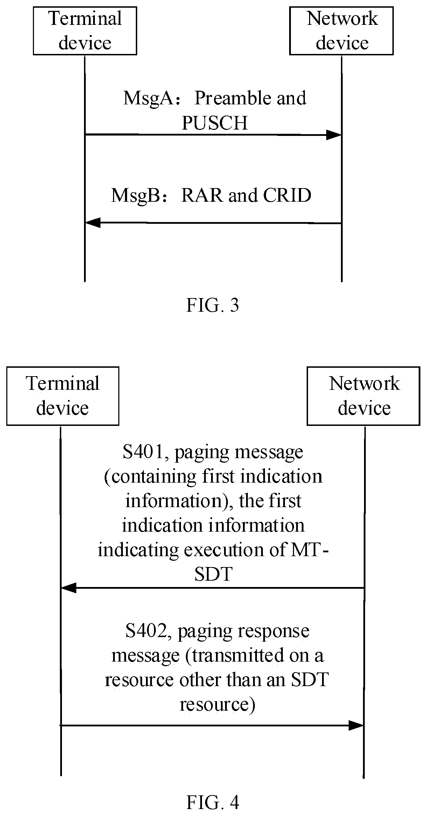

2-step RA consists of message A (also called MsgA) and message B (also called MsgB). The schematic flow chart of 2-step RA is illustrated in FIG. 3.

MsgA includes Msg1 and Msg3, that is, a preamble transmitted on a PRACH and a payload transmitted on a PUSCH. MsgB includes Msg2 and Msg4. If the network device only receives a preamble transmitted by the terminal device, the network device replies with RAR of 4-step RA, and the terminal device falls back to 4-step RA.
(2) Random access channel-small data transmission (RA-SDT), configured grant-SDT (CG-SDT)

SDT includes two transmission modes: RA-SDT and CG-SDT.

RA-SDT refers to a transmission mode in which, in addition to transmitting an RRC message, data can also be carried in Msg3 of 4-step RA, or, RA-SDT refers to a transmission mode in which, in addition to transmitting an RRC message, data can also be carried in MsgA of 2-step RA.

CG-SDT refers to a mode in which the network preconfigures a dedicated CG Type 1 resource(s) for the terminal device, the terminal device uses the resource(s) for transmission and has valid TA, and the terminal device can directly transmit data without transmitting a preamble. Compared with 4-step RA, in CG-SDT Msg1 and Msg2 are omitted.

When the terminal device migrates to the RRC_inactive state through an RRCRelease message, the network may configure some conditions that allow the use of SDT, for example, a data amount threshold is configured, and radio bearers (RBs) that allow the use of SDT are configured, where the RBs include a signaling radio bearer (SRB) and a data radio bearer (DRB). In the embodiments of the present disclosure, the RBs that allow the use of SDT can also be described as RBs supporting SDT.

If CG-SDT is used, the following parameters can also be configured: a CG resource(s), a threshold range for a variation in reference signal received power (RSRP), and a signal threshold for a synchronization signal/physical broadcast channel (PBCH) block (SSB). It may be noted that, CG-SDT is only used in a cell that receives an RRCRelease message. Once the terminal device reselects to a new cell, the terminal device will release a corresponding CG resource(s). Optionally, when CG-SDT is used in different cells, the following parameters may be different: the threshold range for a variation in RSRP, and the signal threshold for an SSB.

If RA-SDT is used, an RSRP threshold may also be configured. Resources of RA-SDT are configured via a system message of each cell. Optionally, RSRP thresholds configured for different cells may be different.

Referring to FIG. 4, FIG. 4 is a schematic flow chart of a paging response method provided in embodiments of the present disclosure. As illustrated in FIG. 4, the paging response method may include but is not limited to the following.

S401, a network device transmits a paging message, where the paging message contains first indication information, and the first indication information indicates execution of mobile terminated (MT)-SDT. Correspondingly, a terminal device receives the paging message.

The terminal device may be in a non-RRC_connected state, and the non-RRC_connected state may refer to an RRC_idle state or an RRC_inactive state. The case that the first indication information indicates execution of MT-SDT means that the terminal device in the non-RRC_connected state can use an SDT resource for uplink transmission. In the embodiments of the present disclosure, the first indication information may also be referred to as an MT-SDT indication. The first indication information may also be described as an indication indicating enhancement paging. Optionally, the paging message may also contain an identity of the terminal device paged.

S402, the terminal device transmits a paging response message on a resource other than an SDT resource. Correspondingly, the network device receives the paging response message on the resource other than the SDT resource.

In the embodiments of the present disclosure, the SDT resource may include but is not limited to: an RA-SDT resource and a CG-SDT resource. The resource other than the SDT resource may include but is not limited to: a 4-step RA resource or a 2-step RA resource, that is, a legacy RA resource different from the RA-SDT resource. The resource other than the SDT resource can be described as a non-SDT resource.

The resource required in a case where the paging response message is transmitted on the resource other than the SDT resource is less than the resource required in a case where the paging response message is transmitted on the RA-SDT resource. Therefore, the case that the terminal device transmits the paging response message on the resource other than the SDT resource is beneficial to saving resources for paging response. In addition, if there is no data transmission in UL within the paging response message, transmitting the paging response message on the RA-SDT resource will result in a waste of resources, while transmitting the paging response message on the resource other than the SDT resource can further save resources for paging response. It may be noted that, the paging response message here refers to an RRCSetup request message or RRCResume request message that can be transmitted during RA initiated by the terminal device after receiving the paging message.

In the embodiments of the present disclosure, transmitting the paging response message on the resource other than the SDT resource is conducive to saving resources for paging response. In addition, if there is no data transmission in UL in the paging response message, transmitting the paging response message on the RA-SDT resource may result in a waste of resources, while transmitting the paging response message on the resource other than the SDT resources can further save resources for paging response. In addition, if a cell to which the terminal device accesses is not configured with a mobile originated (MO)-SDT resource, the terminal device cannot respond to the paging message by way of SDT (that is, the terminal device cannot transmit the paging response message on the SDT resource), and thus the use scenario of enhancement paging may be limited. In the embodiments of the present disclosure, even if the cell is not configured with the MO-SDT resource, the terminal device can also transmit the paging response message on the resource other than the SDT resource. The MO-SDT resource is used in an MO scenario, where the terminal device can transmit UL data on the MO-SDT resource. The MO scenario refers to that there is to-be-transmitted UL data in the terminal device.

The terminal device can transmit the paging response message on the resource other than the SDT resource, or the terminal device can transmit the paging response message on the SDT resource. In an embodiment, the terminal device can determine on which UL resource to transmit the paging response message in the following three methods.

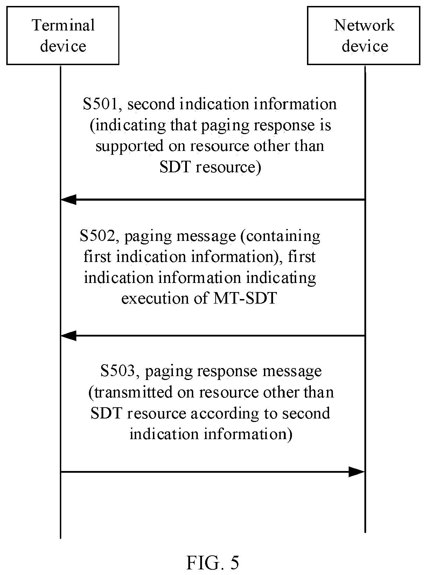

Method 1: The terminal device receives second indication information from the network device, and transmits the paging response message on the resource other than the SDT resource according to the second indication information. The second indication information indicates that paging response is supported on the resource other than the SDT resource. For the specific implementation of Method 1, reference can be made to the illustration in the embodiment corresponding to FIG. 5.

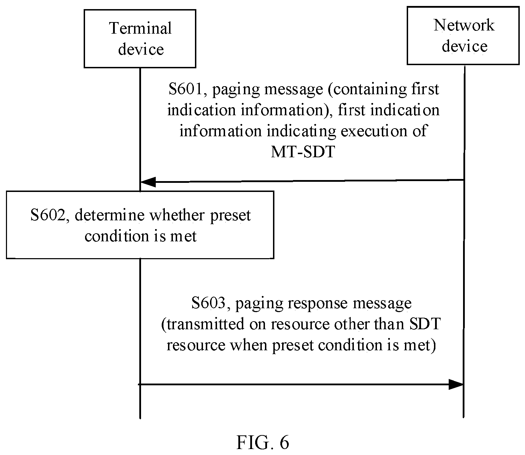

Method 2: The terminal device determines whether a preset condition is met according to a resource condition and/or uplink data to be transmitted. In the case where the preset condition is met, the terminal device transmits the paging response message on the resource other than the SDT resource. For the specific implementation of Method 2, reference can be made to the illustration of the embodiment corresponding to FIG. 6.

Method 3: Method 3 is a combination of Method 1 and Method 2, that is, after the terminal device receives the second indication information, the terminal device determines whether the preset condition is met, and in the case where the preset condition is met, transmits the paging response message on the resource other than the SDT resource.

Referring to FIG. 5, FIG. 5 is a schematic flow chart of another paging response method provided in embodiments of the present disclosure. The method mainly describes that the terminal device transmits a paging response message on a resource other than an SDT resource according to a network indication (i.e., second indication information). As illustrated in FIG. 5, the paging response method may include but is not limited to the following.

S501, the network device transmits second indication information, where the second indication information indicates that paging response is supported on a resource other than an SDT resource. Correspondingly, the terminal device receives the second indication information.

The network device transmits the second indication information, indicating that the network device allows the terminal device to respond to paging on the resource other than the SDT resource. The terminal device receives the second indication information and learns that the network device allows the terminal device to respond to paging on the resource other than the SDT resource.

S502, the network device transmits a paging message, where the paging message contain first indication information, the first indication information indicates execution of MT-SDT. Correspondingly, the terminal device receives the paging message.

S503, the terminal device transmits a paging response message on the resource other than the SDT resource according to the second indication information. Correspondingly, the network device receives the paging response message on the resource other than the SDT resource.

The terminal device receives the second indication information and learns that the network device allows the terminal device to respond to paging on the resource other than the SDT resource. Then, after receiving the paging message carrying the first indication information, the terminal device can directly transmit the paging response message on the resource other than the SDT resource according to the second indication information.

It may be noted that, for the execution process of S502 to S503, reference can be made to the specific illustration of S401 to S402 in the embodiment corresponding to FIG. 4, which will not be repeated here.

Optionally, the second indication information may be contained in a system message, downlink control information (DCI) for scheduling a paging message, or an RRCRelease message. The RRCRelease message is transmitted by the network device before the paging message is transmitted, and the DCI is transmitted by the network device before the paging message is transmitted. It may be noted that, in the present disclosure, the order in which S501 and S502 are executed is not limited. In other possible embodiments, the second indication information may be contained in the paging message. The system message may be, for example, a system information block (SIB). Optionally, the second indication information may be indicated by bit information in a short message. The short message occupies 8 bits, of which 3 bits indicates other information. Optionally, the second indication information may be indicated by a bit in the remaining 5 bits. For example, the value of the 4th bit indicates whether the terminal device is supported to respond to paging on the resource other than the SDT resource. If the value of the 4th bit is 1, the second indication information indicates that the terminal device is supported to respond to paging on the resource other than the SDT resource, that is, the second indication information indicates that the network allows the terminal device to respond to paging on the resource other than the SDT resource. If the value of the 4th bit is 0, the second indication information indicates that the terminal device is not supported to respond to paging on the resource other than the SDT resource, that is, the second indication information indicates that the network does not allow the terminal device to respond to paging on the resource other than the SDT resource.

In the embodiments of the present disclosure, the terminal device transmits the paging response message on the resource other than the SDT resource according to the second indication information, which can quickly determine the resource for carrying the paging response message and is also beneficial to saving resources for paging response.

Referring to FIG. 6, FIG. 6 is a schematic flow chart of another paging response method provided in embodiments of the present disclosure. The method mainly describes that when the terminal device determines that a preset condition is met, the terminal device transmits a paging response message on a resource other than an SDT resource. As illustrated in FIG. 6, the paging response method may include but is not limited to the following.

S601, a network device transmits a paging message, where the paging message contains first indication information, and the first indication information indicates execution of MT-SDT. Correspondingly, a terminal device receives the paging message.

It may be noted that, for the execution process of S601, reference can be made to the specific illustration of S401 in the embodiment corresponding to FIG. 4, which will not be repeated here.

S602, the terminal device determines whether a preset condition is met.

The case that the terminal device determines whether the preset condition is met includes: determining whether there is an available SDT resource; and/or determining whether there is uplink data to be transmitted.

The terminal device can determine whether there is an available SDT resource in the following manner: the terminal device determines whether the network configures an SDT resource, and if the network configures no SDT resource, the terminal device determines that there is no available SDT resource; if the network configures an SDT resource, the terminal device can further determine whether the configured SDT resource is available. If the configured SDT resource is not available, it is determined that there is no available SDT resource. If the configured SDT resource is available, it is determined that there is an available SDT resource. Optionally, an SDT resource can be configured through a system message and/or an RRCRelease message. In a possible embodiment, the system message and/or RRCRelease message may contain an SDT configuration, where the SDT configuration can be used to configure an SDT resource. If the system message and/or RRCRelease message does not carry the SDT configuration, or the SDT configuration includes no configuration of an SDT resource, or no SDT resource is configured through the system message and/or RRCRelease message, then the terminal device can determine that the network configure no SDT resource. Optionally, the SDT resource configured by the system message may refer to an RO and/or preamble resource of RA-SDT, or refer to a CG resource of CG-SDT.

If the network configures an SDT resource, further, the terminal device can determine whether the configured SDT resource is available in the following manners: the terminal device determines whether the configured SDT resource is occupied; or, whether an unoccupied part of the configured SDT resource is a reserved resource; or, whether the CG-SDT resource meets a use condition. In the case where the unoccupied part of the configured SDT resource is a reserved resource, then the unoccupied SDT resource cannot be used. In the case where the CG-SDT resource does not meet the use condition, the CG-SDT resource cannot be used. Exemplarily, in the case where the terminal device has valid TA, the CG-SDT resource meets the use condition; and in the case where the terminal device has no valid TA, the CG-SDT resource does not meet the use condition. In the case where the configured SDT resource is occupied, or, the unoccupied part of the configured SDT resource is a reserved resource, or, the CG-SDT resource does not meet the use condition, the terminal device can determine that the configured SDT resource is unavailable. For example, the configured RA-SDT resource is occupied, or the configured CG-SDT resource is occupied or unavailable.

The terminal device determines whether there is uplink data to be transmitted, and the uplink data may refer to useful data, service data or user data to be transmitted in the terminal device. Optionally, if there is uplink data to be transmitted in the terminal device, the terminal device may further determine whether the SDT resource can support carrying the uplink data, that is, determine whether the uplink data to be transmitted can be transmitted using the SDT resource, that is, determine whether the uplink data to be transmitted is data that allows SDT transmission. The case that the SDT resource can support carrying the uplink data may refer to that: the uplink data to be transmitted can be transmitted using the SDT resource, or, the uplink data to be transmitted is data that allows SDT transmission. The case that the SDT resource does not support carrying the uplink data may refer to that: the uplink data to be transmitted cannot be transmitted using the SDT resource, or, the uplink data to be transmitted is data that does not allow SDT transmission.

Optionally, the specific implementation manner for the terminal device to determine whether the SDT resource can support carrying the uplink data may be that: if identifiers of RBs supporting SDT include an RB identifier of the uplink data to be transmitted, the terminal device determines that the SDT resource can support carrying the uplink data. Optionally, if the identifiers of the RBs supporting SDT do not include the RB identifier of the uplink data to be transmitted, it is determined that the SDT resource does not support carrying the uplink data. In other words, if the uplink data to be transmitted is allowed RB data, it is determined that the uplink data to be transmitted can be transmitted using the SDT resource; and if the uplink data to be transmitted is not allowed RB data, it is determined that the uplink data to be transmitted cannot be transmitted using the SDT resource.

Alternatively, the specific implementation manner for the terminal device to determine whether the SDT resource can support carrying the uplink data may be that: the terminal device determines whether the identifiers of the RBs supporting SDT include the RB identifier of the uplink data to be transmitted, and determines whether a data amount of the uplink data to be transmitted meets a data amount threshold. If the identifiers of the RBs supporting SDT include the RB identifier of the uplink data to be transmitted, and the data amount of the uplink data to be transmitted meets the data amount threshold, it is determined that the SDT resource can support carrying the uplink data. If the identifiers of the RBs supporting SDT do not include the RB identifier of the uplink data to be transmitted, and/or the data amount of the uplink data to be transmitted does not meet the data amount threshold, it is determined that the SDT resource does not support carrying the uplink data. If the identifiers of the RBs supporting SDT include the RB identifier of the uplink data to be transmitted, it means that the uplink data to be transmitted is allowed RB data. If the identifiers of the RBs supporting SDT does not include the RB identifier of the uplink data to be transmitted, it means that the uplink data to be transmitted is not allowed RB data. The identifiers of the RBs supporting SDT can be configured by the network. The case whether the data amount of the uplink data to be transmitted meets the data amount threshold includes that: whether the data amount of the uplink data to be transmitted is less than the data amount threshold, and if the data amount of the uplink data to be transmitted is less than the data amount threshold, it means that the data amount of the uplink data to be transmitted meets the data amount threshold; and if the data amount of the uplink data to be transmitted is greater than or equal to the data amount threshold, it means that the data amount of the uplink data to be transmitted does not meet the data amount threshold.

In an implementation, for the case that the terminal device determines whether the preset condition is met, the terminal device can first determine whether the network configures an SDT resource, and if the network configures no SDT resource, then the terminal device can determine whether there is uplink data to be transmitted. If the SDT resource is configured, then the terminal device determines whether there is an available SDT resource. If there is no available SDT resource, then the terminal device determines whether there is uplink data to be transmitted. If there is an available SDT resource, the terminal device can further transmit a paging response message on the SDT resource, or, the terminal device can further determine whether there is uplink data to be transmitted.

S603, the terminal device transmits a paging response message on a resource other than an SDT resource when the preset condition is met. Correspondingly, the network device receives the paging response message on the resource other than the SDT resource.

The case that the preset condition is met may include but is not limited to: no available SDT resource; and/or no uplink data to be transmitted.

In an embodiment, if there is uplink data to be transmitted in the terminal device, and the SDT resource can support carrying the uplink data, the terminal device can determine which SDT resource (such as a CG-SDT resource, an RA-SDT resource of 4-step RA, an RA-SDT resource of 2-step RA) is used to transmit the uplink data and the paging response message through the following process: the terminal device determines whether the CG-SDT resource can be used, and if the CG-SDT resource cannot be used, the terminal device transmits the uplink data and the paging response message on the RA-SDT resource. The case that the terminal device transmits the uplink data and the paging response message on the RA-SDT resource includes that: the terminal device transmits Msg1 on the RA-SDT resource of 4-step RA, the network device determines that the terminal device uses SDT for transmission and allocates suitable uplink grant to the terminal device based on reception of Msg1 on the RA-SDT resource, and the terminal device transmits the uplink data and the paging response message on the UL grant. Alternatively, the terminal device transmits the 2-step RA. Subsequently, the terminal device can continue to remain in an RRC_inactive state and transmit data through dynamic scheduling. For example, if the network device only receives a preamble transmitted by the terminal device on the SDT resource, fall back to 4-step RA. At this point, the terminal device transmits uplink data and the paging response message on a resource scheduled by the network. Exemplarily, the above-mentioned determination on whether the CG-SDT resource can be used includes: determining whether a change in TA of the terminal device is within a valid range, and if the location of the terminal device changes greatly, TA becomes unavailable, in this case, the CG-SDT resource cannot be used, and the terminal device needs to transmit a preamble through RA to obtain valid TA.

It may be noted that, when there is no uplink data to be transmitted in the terminal device, the terminal device transmits the paging response message on the resource other than the SDT resource, in this case, the paging response message carries a signaling indicating that the terminal device has received the paging message. The signaling is control data and is different from uplink data.

In an embodiment, when the preset condition is not met, the terminal device can directly transmit the paging response message on the SDT resource. The case that the preset condition is not met may include: the existence of an available SDT resource; and/or the existence of uplink data to be transmitted. The existence of an available SDT resource includes that: the network configures an SDT resource, and there is an available part in the configured SDT resource, that is, there is an unoccupied part in the configured SDT resource or the configured CG-SDT resource meets a use condition.

In another implementation, when the preset condition is not met, the terminal device needs to further determine whether to transmit the paging response message on the SDT resource. Exemplarily, if there is uplink data to be transmitted, the terminal device determines whether to transmit the paging response message on the SDT resource. The specific implementation manner for the terminal device to determine whether to transmit the paging response message on the SDT resource if there is uplink data to be transmitted may be that: the terminal device determines whether the SDT resource can support carrying the uplink data, that is, determines whether the uplink data to be transmitted can be transmitted using the SDT resource. If the SDT resource can support carrying the uplink data, further, the terminal device can transmit the paging response message and the uplink data on the SDT resource. If the SDT resource does not support carrying the uplink data, the terminal device does not transmit the paging response message on the SDT resource. The specific implementation manner for the terminal device to determine whether the SDT resource can support carrying the uplink data may be that: if identifiers of RBs supporting SDT include an RB identifier of the uplink data to be transmitted, the terminal device determines that the SDT resource can support carrying the uplink data. Optionally, if the identifiers of the RBs supporting SDT do not include the RB identifier of the uplink data to be transmitted, it can be determined that the SDT resource does not support carrying the uplink data. Alternatively, the terminal device determines whether the identifiers of the RBs supporting SDT include the RB identifier of the uplink data to be transmitted, and determines whether a data amount of the uplink data to be transmitted meets a data amount threshold. If the identifiers of the RBs supporting SDT includes the RB identifier of the uplink data to be transmitted, and the data amount of the uplink data to be transmitted meets the data amount threshold, it is determined that the SDT resource can support carrying the uplink data. If the identifiers of the RBs supporting SDT do not include the RB identifier of the uplink data to be transmitted, and/or the data amount of the uplink data to be transmitted does not meet the data amount threshold, it is determined that the SDT resource does not support carrying the uplink data.

In the embodiments of the present disclosure, the terminal device determines whether the preset condition is met according to situations of the terminal device, and if the preset condition is met, the terminal device transmits the paging response message on the resource other than the SDT resource. For example, in the case where there is no available SDT resource, and/or in the case where there is no uplink data to be transmitted, the paging response message is transmitted on the resource other than the SDT resource. This method does not rely on network indications and is also conducive to saving resources for paging response.

In an embodiment, Method 3 is a combination of Method 1 and Method 2, that is, after receiving the second indication information, the terminal device determines whether the preset condition is met, and if the preset condition is met, transmits the paging response message on the resource other than the SDT resource. Exemplarily, after receiving the second indication information, the terminal device determines whether there is uplink data to be transmitted, and if there is no uplink data to be transmitted, transmits the paging response message on the resource other than the SDT resource.

Optionally, after receiving the second indication information, the terminal device determines whether the preset condition is met, and if the preset condition is not met, the terminal device can directly send the paging response message on the SDT resource, or the terminal device needs to further determine whether to transmit the paging response message on the SDT resource. Exemplarily, if there is uplink data to be transmitted, the terminal device determines whether to transmit the paging response message on the SDT resource. If there is uplink data to be transmitted, the specific implementation manner for the terminal device to determine whether to transmit the paging response message on the SDT resource may be that: the terminal device determines whether the SDT resource can support carrying the uplink data. If the SDT resource can support carrying the uplink data, further, the terminal device can transmit the paging response message and the uplink data on the SDT resource. If the SDT resource does not support carrying the uplink data, the terminal device does not transmit the paging response message on the SDT resource. Alternatively, the specific implementation manner for the terminal device to determine whether to transmit the paging response message on the SDT resource if there is uplink data to be transmitted may be that: the terminal device determines whether identifiers of RBs supporting SDT includes an RB identifier of the uplink data to be transmitted, and determines whether a data amount of the uplink data to be transmitted meets a data amount threshold. If the identifiers of the RBs supporting SDT includes the RB identifier of the uplink data to be transmitted, and the data amount of the uplink data to be transmitted meets the data amount threshold, the terminal device can transmit the paging response message and the uplink data on the SDT resource. If the identifiers of the RBs supporting SDT does not include the RB identifier of the uplink data to be transmitted, and/or the data amount of the uplink data to be transmitted does not meet the data amount threshold, the terminal device does not transmit the paging response message on the SDT resource.

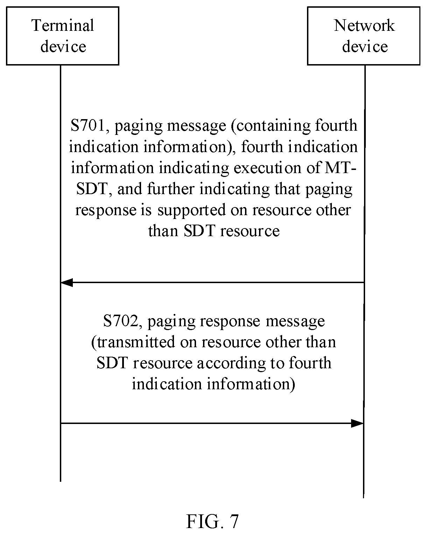

Referring to FIG. 7, FIG. 7 is a schematic flow chart of another paging response method provided in embodiments of the present disclosure. The method mainly describes that in the case where a paging message contains fourth indication information, the terminal device transmits a paging response message on a resource other than an SDT resource. As illustrated in FIG. 7, the paging response method may include but is not limited to the following.

S701, a network device transmits a paging message, where the paging message contains fourth indication information, the fourth indication information indicates execution of MT-SDT and further indicates that paging response is supported on a resource other than an SDT resource. Correspondingly, the terminal device receives the paging message.

The fourth indication information can be understood as indication information that is a combination of the first indication information and the second indication information in the corresponding embodiments corresponding to FIGs. 4 and 5. For the content indicated by the fourth indication information, reference can be made to the relevant illustration of the first indication information and the second indication information in the corresponding embodiments corresponding to FIGs. 4 and 5, which will not be repeated here.

S702, the terminal device transmits a paging response message on the resource other than the SDT resource according to the fourth indication information. Correspondingly, the network device receives the paging response message on the resource other than the SDT resource.

The terminal device receives the fourth indication information, learns that the paging message is MT-SDT paging and the network device allows the terminal device to respond to paging on the resource other than the SDT resource, then the terminal device can directly transmit the paging response message on the resource other than the SDT resource.

In an embodiment, after receiving the paging message carrying the fourth indication information, the terminal device can also determine whether the preset condition is met, and if the preset condition is met, transmit the paging response message on the resource other than the SDT resource.

Optionally, when the preset condition is not met, the terminal device can directly transmit the paging response message on the SDT resource, or the terminal device needs to further determine whether to transmit the paging response message on the SDT resource. Exemplarily, if there is uplink data to be transmitted in the terminal device, in this case, it can be determined that the preset condition is not met, and the terminal device can determine whether to transmit the paging response message on the SDT resource in the following manner: the terminal device determines whether the SDT resource can support carrying the uplink data, and if the SDT resource can support carrying the uplink data, further, the terminal device can transmit the paging response message and the uplink data on the SDT resource. If the SDT resource do not support carrying the uplink data, the terminal device does not transmit the paging response message on the SDT resource. Alternatively, the terminal device determines whether identifiers of RBs supporting SDT includes an RB identifier of the uplink data to be transmitted, and determines whether data amount of the uplink data to be transmitted meets a data amount threshold. If the identifiers of the RBs supporting SDT include the RB identifier of the uplink data to be transmitted, and the data amount of the uplink data to be transmitted meets the data amount threshold, the terminal device can transmit the paging response message and the uplink data on the SDT resource. If the identifiers of the RBs supporting SDT does not include the RB identifier of the uplink data to be transmitted, and/or the data amount of the uplink data to be transmitted does not meet the data amount threshold, the terminal device does not transmit the paging response message on the SDT resource.

In the embodiments of the present disclosure, the terminal device transmits the paging response message on the resource other than the SDT resource according to the fourth indication information, which can quickly determine the resource for carrying the paging response message and is also beneficial to saving resources for paging response.

In an embodiment, after S402, S503, S602, and S702 (i.e., after the terminal device transmits the paging response message on the resource other than the SDT resource), the terminal device may remain in an RRC_inactive state for data transmission, or the terminal device starts an SDT timer (also referred to as an SDT transmission timer). In other words, after the terminal device transmits the paging response message on the resource other than the SDT resource (such as a legacy RA resource), the terminal device does not perform state switching and remains in the RRC_inactive state for data transmission. After the terminal device initiates legacy RA, the terminal device starts the SDT transmission timer, remains in the RRC_inactive state for data transmission, and monitors data transmission scheduling information in a search space configured by the network. Once a signaling for terminating SDT transmission is received from the network device, such as an RRCResume message, an RRCSetup message, an RRCRelease message, an RRCReject message, or a failure scenario occurs, the terminal device stops the SDT transmission timer, terminates SDT transmission, and returns to an RRC_idle state. After the terminal device transmits the paging response message through the legacy RA resource, the terminal device starts the SDT timer, so that before the SDT timer times out, the terminal device does not perform state switching and remains in the RRC_inactive state for data transmission. Optionally, the SDT timer may be called a T319a timer. Optionally, the duration of the SDT timer can be agreed by a protocol, or indicated by the network device, or set by default by the terminal device, or determined by service situations of the terminal device. Exemplarily, in the case where the terminal device transmits the paging response message through the legacy RA resource, the duration of the SDT timer can be determined according to the amount of data required to be transmitted by a service run in the terminal device. The larger the amount of data to be transmitted, the longer the duration may be; the smaller the amount of data to be transmitted, the shorter the duration may be.

In an embodiment, the network device can transmit a third indication message, where the third indication message indicates an SDT search space, and the network device can transmit scheduling information on an SDT resource belonging to the SDT search space. Accordingly, the terminal device receives the third indication message, receives the scheduling information on the SDT resource belonging to the SDT search space, and then transmits uplink data and/or receives downlink data on a resource indicated by the scheduling information. Accordingly, the network device receives uplink data and/or transmits downlink data on the resource indicated by the scheduling information. The network device configures the SDT search space, so that the terminal device can subsequently receive scheduling information by way of SDT, to perform data transmission. Optionally, the network device may transmit the third indication message in the case where no SDT resource is configured. Exemplarily, if a cell is configured with no SDT resource, the cell may be configured with the SDT search space, so that the terminal device can subsequently receive scheduling information by way of SDT, to perform data transmission. The network device serves the cell.

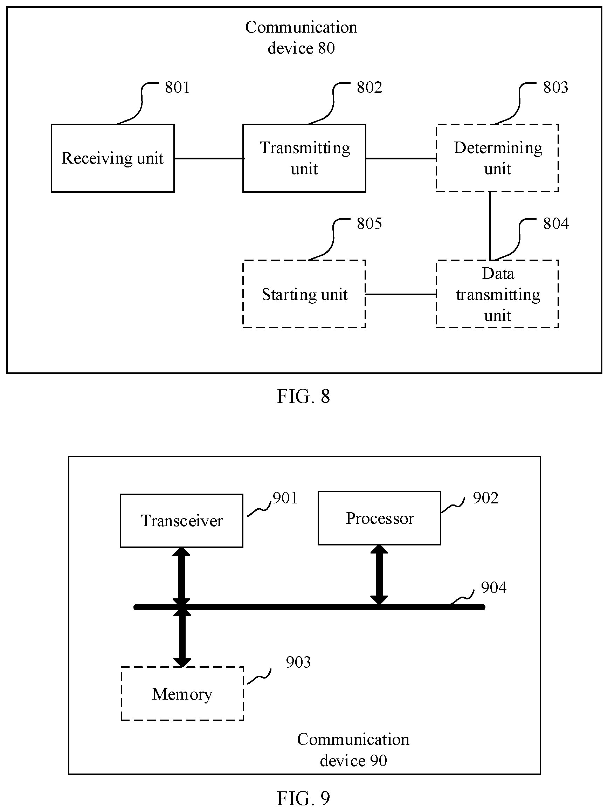

Referring to FIG. 8, FIG. 8 is a schematic structural diagram of a communication device provided in embodiments of the present disclosure. As illustrated in FIG. 8, the communication device 80 includes a receiving unit 801 and a transmitting unit 802. The communication device 80 can execute the relevant steps performed by the terminal device and the network device in the above method embodiments.

For the case where the communication device 80 is configured to implement the functions of the terminal device in the embodiment corresponding to FIG. 4, the receiving unit 801 is configured to receive a paging message, where the paging message contains first indication information, and the first indication information indicates execution of MT-SDT. The transmitting unit 802 is configured to transmit a paging response message on a resource other than an SDT resource.

In an optional embodiment, the receiving unit 801 is further configured to receive second indication information, where the second indication information indicates that paging response is supported on a resource other than an SDT resource. The transmitting unit 802 configured to transmit the paging response message on the resource other than the SDT resource is specifically configured to transmit the paging response message on the resource other than the SDT resource according to the second indication information.

In an optional embodiment, the transmitting unit 802 configured to transmit the paging response message on the resource other than the SDT resource is specifically configured to transmit the paging response message on the resource other than the SDT resource in a case where a preset condition is met.

In an optional embodiment, the preset condition includes: no available SDT resource; and/or no uplink data to be transmitted.

In an optional embodiment, no available SDT resource includes that: no SDT resource is configured by a network, or a configured SDT resource is unavailable.

In an optional embodiment, the communication device 80 further includes a determining unit 803 configured to determine whether to transmit the paging response message on the SDT resource if there is uplink data to be transmitted.

In an optional embodiment, the communication device 80 further includes a data transmitting unit 804 configured to remain in an RRC_inactive state for data transmission after transmitting the paging response message on the resource other than the SDT resource. Alternatively, the communication device 80 further includes a starting unit 805 configured to start an SDT timer after transmitting the paging response message on the resource other than the SDT resource.

In an optional embodiment, the receiving unit 801 is further configured to receive a third indication information, where the third indication information indicates an SDT search space; and to receive scheduling information on an SDT resource belonging to the SDT search space. The transmitting unit 802 is further configured to transmit uplink data on a resource indicated by the scheduling information, and/or the receiving unit 801 is further configured to receive downlink data on the resource indicated by the scheduling information.

In an optional embodiment, the second indication information is contained in a paging message, a system message or an RRCRelease message.

In an optional embodiment, the resource other than the SDT resource includes: a 4-step RA resource or a 2-step RA resource.

Specifically, in this case, for the operations performed by the receiving unit 801, the transmitting unit 802, the determining unit 803, the data transmitting unit 804, and the starting unit 805, reference can be made to the illustration of the terminal device in the embodiment corresponding to FIG. 4.

In an embodiment, for a case where the communication device 80 is configured to implement the functions of the network device in the above-mentioned embodiments corresponding to FIG. 4 to FIG. 7, the transmitting unit 802 is configured to transmit a paging message, where the paging message contains first indication information, and the first indication information indicates execution of MT-SDT. The receiving unit 801 is configured to receive a paging response message on a resource other than an SDT resource.

In an optional embodiment, the transmitting unit 802 is further configured to transmit second indication information, where the second indication information indicates that paging response is supported on the resource other than the SDT resource.

In an optional embodiment, the receiving unit 801 configured to receive the paging response message on the resource other than the SDT resource is specifically configured to receive the paging response message on the resource other than the SDT resource in the case where there is no available SDT resource.

In an optional embodiment, no available SDT resource includes that: no SDT resource is configured by a network, or a configured SDT resource is unavailable.

In an optional embodiment, the transmitting unit 802 is further configured to transmit third indication information, where the third indication information indicates an SDT search space; and to transmit scheduling information on an SDT resource belonging to the SDT search space. The receiving unit 801 is further configured to receive uplink data on a resource indicated by the scheduling information, and/or the transmitting unit 802 is further configured to transmit downlink data on the resource indicated by the scheduling information.

In an optional embodiment, the transmitting unit 802 configured to transmit the third indication information is specifically configured to transmit the third indication information in the case where no SDT resource is configured.

In an optional embodiment, the second indication information is contained in a paging message, a system message, or an RRCRelease message.

In an optional embodiment, the resource other than the SDT resource includes: a 4-step RA resource or a 2-step RA resource.

Specifically, in this case, for the operations performed by the receiving unit 801 and the transmitting unit 802, reference may be made to the illustration of the network devices in the embodiments corresponding to FIGs. 4 to 7.

The communication device 80 can be further configured to implement other functions of the terminal device and the network device in the embodiments corresponding to FIGs. 4 to 7, which will not be described in detail here. Based on the same inventive concept, the principle to solve the problem and the beneficial effect of the communication device 80 provided in the embodiments of the present disclosure are similar to the principle to solve the problem and the beneficial effect of the terminal device and the network device in the method embodiments of the present disclosure, and reference can be made to the principle and beneficial effect of the method embodiments, which will not be described in detail here for the sake of brevity.

Referring to FIG. 9, FIG. 9 illustrates another communication device 90 provided in embodiments of the present disclosure. The communication device 90 can be configured to implement the functions of the terminal device in the above method embodiments, or to implement the functions of the network device in the above method embodiments. The communication device 90 may include a transceiver 901 and a processor 902. Optionally, the communication device may further include a memory 903. The transceiver 901, the processor 902, and the memory 903 may be connected via a bus 904 or other manners. The bus is represented by a bold line in FIG. 9, and the connection manner between other components is only for schematic illustration and is not limited thereto. The bus can be classified into an address bus, a data bus, a control bus, etc. For ease of representation, only one bold line is used in FIG. 9, but it does not mean that there is only one bus or one type of bus.

The coupling in the embodiments of the present disclosure is an indirect coupling or communication connection between devices, units, or modules, which may be electrical, mechanical or other forms, and is used for information exchange between devices, units, or modules. The specific connection medium between the above-mentioned transceiver 901, the processor 902, and the memory 903 is not limited in the embodiments of the present disclosure.

The memory 903 may include a read-only memory (ROM) and a random access memory (RAM), and can provide instructions and data to the processor 902. A part of the memory 903 may further include a nonvolatile RAM.

The processor 902 may be a central processing unit (CPU), or other general-purpose processors, a digital signal processor (DSP), an application-specific integrated circuit (ASIC), a field-programmable gate array (FPGA), or other programmable logic devices, a discrete gate or transistor logic device, a discrete hardware component, etc. The general-purpose processor may be a microprocessor, and optionally, the processor 902 may be any conventional processor, etc.

In one example, in the case where the terminal device is in the form as illustrated in FIG. 9, the processor in FIG. 9 can execute the method executed by the terminal device in any of the above method embodiments.

In one example, in the case where the network device is in the form as illustrated in FIG. 9, the processor in FIG. 9 may execute the method executed by the network device in any of the above method embodiments.

In an optional embodiment, the memory 903 is configured to store program instructions, and the processor 902 is configured to call program instructions stored in the memory 903 to execute the steps executed by the terminal device and the network device in the embodiments corresponding to FIGs. 4 to 7. Specifically, the functions/implementation of the receiving unit, the transmitting unit, the determining unit, the data transmitting unit, and the starting unit in FIG. 8 can all be implemented by the processor 902 in FIG. 9 calling the computer executable instructions stored in the memory 903. Alternatively, the functions/ implementation of the determining unit, the data transmitting unit, and the starting unit in FIG. 8 can be implemented by the processor 902 in FIG. 9 calling the computer executable instructions stored in the memory 903, and the functions/implementation of the receiving unit and the transmitting unit in FIG. 8 can be implemented by the transceiver 901 in FIG. 9.

In the embodiments of the present disclosure, the methods provided in the embodiments of the present disclosure can be implemented by running a computer program (including program codes) capable of executing each step involved in the above methods on a general computing device including a CPU, a RAM, a ROM and other processing elements and storage elements, such as a computer. The computer program can be recorded on a computer-readable recording medium, for example, and loaded into the above computing device through the computer-readable recording medium and run therein.

Based on the same inventive concept, the principle to solve the problem and beneficial effects of the communication device 90 provided in the embodiments of the present disclosure are similar to the principle to solve the problem and beneficial effects of the terminal device and the network device in the method embodiments of the present disclosure, and reference can be made to the principles and beneficial effects of the method embodiments, which will not be repeated here for the sake of brevity.

The aforementioned communication device (such as the communication device 80 and the communication device 90) may be, for example, a chip or a chip module.

The embodiments of the present disclosure further provide a chip, which can execute the relevant steps of the terminal device and the network device in the aforementioned method embodiments.

For the case where the chip is configured to implement the functions of the terminal device in the above-mentioned embodiments corresponding to FIG. 4 to FIG. 7, the chip is configured to receive a paging message, where the paging message contains first indication information, and the first indication information indicates execution of MT-SDT; and to transmit the paging response message on the resource other than the SDT resource.

In an optional embodiment, the chip is further configured to receive second indication information, where the second indication information indicates that paging response is supported on the resource other than the SDT resource. The chip configured to transmit the paging response message on the resource other than the SDT resource is specifically configured to transmit the paging response message on the resource other than the SDT resource according to the second indication information.

In an optional embodiment, the chip configured to transmit the paging response message on the resource other than the SDT resource is specifically configured to transmit the paging response message on the resource other than the SDT resource in a case where a preset condition is met.

In an optional embodiment, the preset condition includes: no available SDT resource; and/or there is no uplink data to be transmitted.

In an optional embodiment, no available SDT resource includes that: no SDT resource is configured by a network, or a configured SDT resource is unavailable.

In an optional embodiment, the chip is further configured to determine whether to transmit the paging response message on the SDT resource in the case where there is uplink data to be transmitted.

In an optional embodiment, the chip is further configured to remain in an RRC_inactive state for data transmission or to start an SDT timer, after transmitting the paging response message on the resource other than the SDT resource.

In an optional embodiment, the chip is further configured to receive third indication information, where the third indication information indicates an SDT search space; to receive scheduling information on an SDT resource belonging to the SDT search space; and to transmit uplink data and/or receive downlink data on a resource indicated by the scheduling information.

In an optional embodiment, the second indication information is contained in a paging message, a system message, or an RRCRelease message.

In an optional embodiment, the resource other than the SDT resource includes: a 4-step RA resource or a 2-step RA resource.

Specifically, in this case, for the operations performed by the chip, reference can be made to the illustration of the terminal device in the embodiments corresponding to FIGs. 4-7.

In an embodiment, for a case where the chip is configured to implement the functions of the network device in the above-mentioned embodiments in FIGs. 4-7, the chip is configured to transmit a paging message, where the paging message contains first indication information, and the first indication information indicates execution of MT-SDT; and to receive a paging response message on a resource other than an SDT resource.

In an optional embodiment, the chip is further configured to transmit second indication information, where the second indication information indicates that paging response is supported on the resource other than the SDT resource.

In an optional embodiment, the chip configured to receive the paging response message on the resource other than the SDT resource is specifically configured to receive the paging response message on the resource other than the SDT resource in a case where there is no available SDT resource.

In an optional embodiment, no available SDT resource includes that: no SDT resource is configured by a network, or a configured SDT resource is unavailable.

In an optional embodiment, the chip is further configured to transmit third indication information, where the third indication information indicates an SDT search space; to transmit scheduling information on an SDT resource belonging to the SDT search space; and to receive uplink data and/or transmit downlink data on a resource indicated by the scheduling information.

In an optional embodiment, the chip configured to transmit the third indication information is specifically configured to transmit the third indication information in a case where no SDT resource is configured.

In an optional embodiment, the second indication information is contained in a paging message, a system message or an RRCRelease message.

In an optional embodiment, the resource other than the SDT resource includes: a 4-step RA resource or a 2-step RA resource.

Specifically, in this case, for the operations performed by the chip, reference can be made to the illustration of the network device in the embodiments corresponding to FIGs. 4 to 7.

In an possible embodiment, the chip includes at least one processor, at least one first memory, and at least one second memory. The at least one first memory and the at least one processor are interconnected via lines, and the first memory stores instructions. The at least one second memory and the at least one processor are interconnected via lines, and the second memory stores data that needs to be stored in the method embodiments.

For each device or product applied to or integrated in the chip, each module contained therein may be implemented in the form of hardware such as circuits, or at least some of the modules may be implemented in the form of software programs which run on a processor integrated inside the chip, and the remaining modules (if any) may be implemented in the form of hardware such as circuits.

Based on the same inventive concept, the principle to solve the problem and beneficial effects of the chip provided in the embodiments of the present disclosure are similar to the principle to solve the problem and beneficial effects of the terminal device and network device in the method embodiments of the present disclosure, and reference can be made to the principles and beneficial effects of the method embodiments, which will not be repeated here for the sake of brevity.

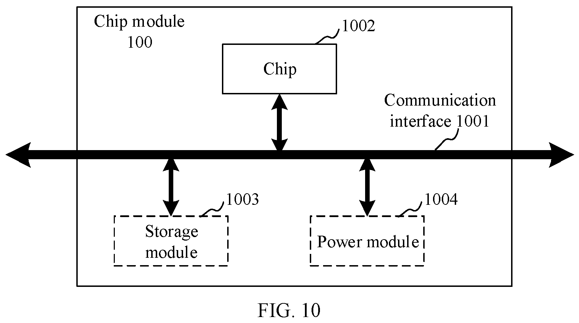

Referring to FIG. 10, FIG. 10 is a schematic structural diagram of a chip module provided in embodiments of the present disclosure. The chip module 100 can execute the relevant steps of the terminal device and the network device in the aforementioned method embodiments, and the chip module 100 includes a communication interface 1001 and a chip 1002.

The communication interface is configured for internal communication of the chip module, or for the chip module to communicate with external devices. The chip is configured to implement the functions of the terminal device and the network device in the embodiments of the present disclosure, and specifically, reference can be made to the corresponding embodiments in FIGs. 4 to 7. Optionally, the chip module 100 may further include a storage module 1003 and a power module 1004. The storage module 1003 is configured to store data and instructions. The power module 1004 is configured to power the chip module.

For each device or product applied to or integrated in the chip module, each module contained therein can be implemented by hardware such as circuits, and different modules can be located in the same component (such as a chip, a circuit module, etc.) or different components of the chip module. Alternatively, at least part of the modules can be implemented by software programs that run on a processor integrated inside the chip module, and the remaining modules (if any) can be implemented by hardware such as circuits.

The embodiments of the present disclosure further provide a computer-readable storage medium, in which a computer program is stored. The computer program includes one or more program instructions, and the one or more program instructions are suitable for being loaded by a communication device and executing the methods provided by the above method embodiments.

The embodiments of the present disclosure further provide a computer program product including a computer program or instructions. When the computer program or instructions are executed on a computer, the computer executes the method provided by the above method embodiments.

The embodiments of the present disclosure further provide a paging response system, which may include the terminal device and the network device in the corresponding embodiments corresponding to FIGs. 4 to 7.

The various modules/units contained in various devices and products described in the above embodiments may be software modules/units, hardware modules/units, or partly software modules/units and partly hardware modules/units. For example, for various devices and products applied to or integrated in a chip, various modules/units contained therein may all be implemented in the form of hardware such as circuits, or at least part of the modules/units may be implemented in the form of software programs which can be run on a processor integrated inside the chip, and the remaining modules/units (if any) may be implemented in the form of hardware such as circuits. For various devices and products applied to or integrated in a chip module, each module/unit contained therein can be implemented by hardware such as circuits, and different modules/units can be located in the same component (e.g., chip, circuit module, etc.) or in different components of a chip module, or at least part of modules/units can be implemented by software programs which can be run on a processor integrated inside the chip module, and the remaining modules/units (if any) can be implemented by hardware such as circuits. For various devices or products applied to or integrated in a terminal, each module/unit contained therein can be implemented by hardware such as circuits, and different modules/units can be located in the same component (e.g., chip, circuit module, etc.) or in different components of a terminal, or at least part of modules/units can be implemented by software programs which can be run on a processor integrated inside the terminal, and the remaining modules/units (if any) can be implemented by hardware such as circuits.

It may be noted that, for the above-mentioned various method embodiments, for the sake of simplicity of illustration, they are all expressed as a series of action combinations, but those skilled in the art should be aware that the present disclosure is not limited by the order of the actions described, because according to the present disclosure, some steps can be performed in other orders or simultaneously. Secondly, those skilled in the art should also be aware that, the embodiments described in the specification are all preferred embodiments, and the actions and modules involved are not necessarily required by the present disclosure.

The steps in the methods of the embodiments of the present disclosure can be adjusted in order, combined, and deleted according to actual needs.

The modules in the devices of the embodiments of the present disclosure can be merged, divided, and deleted according to actual needs.

A person of ordinary skill in the art may understand that all or part of the steps in the various methods of the above-mentioned embodiments may be completed by program instructions and related hardware. The program instructions may be stored in a computer-readable storage medium. The computer-readable storage medium may include: a flash drive, a ROM, a RAM, a magnetic disk, or an optical disk, etc.

The above disclosure is only one embodiment of the present disclosure, which is only a part of the embodiments of the present disclosure and cannot be used to limit the scope of rights of the present disclosure.

## Claims

1. A paging response method, comprising:
receiving a paging message, wherein the paging message contains first indication information, and the first indication information indicates execution of mobile terminated-small data transmission (MT-SDT); and
transmitting a paging response message on a resource other than an SDT resource.

2. The method according to claim 1, further comprising:
receiving second indication information, wherein the second indication information indicates that paging response is supported on the resource other than the SDT resource;
wherein transmitting the paging response message on the resource other than the SDT resource comprises:
transmitting the paging response message on the resource other than the SDT resource according to the second indication information.

3. The method according to claim 1, wherein transmitting the paging response message on the resource other than the SDT resource comprises:
transmitting the paging response message on the resource other than the SDT resource in a case where a preset condition is met.

4. The method according to claim 3, wherein the preset condition comprises: no available SDT resource; and/or no uplink data to be transmitted.

5. The method according to claim 4, wherein no available SDT resource comprises that:
no SDT resource is configured by a network, or a configured SDT resource is unavailable.

6. The method according to any one of claims 1 to 4, further comprising:
determining whether to transmit the paging response message on the SDT resource in a case where there is uplink data to be transmitted.

7. The method according to any one of claims 1 to 6, wherein after transmitting the paging response message on the resource other than the SDT resource, the method further comprises:
remaining in a radio resource control_inactive (RRC_inactive) state for data transmission or starting an SDT timer.

8. The method according to claim 1, further comprising:
receiving third indication information, wherein the third indication information indicates an SDT search space;
receiving scheduling information on an SDT resource belonging to the SDT search space; and
transmitting uplink data and/or receiving downlink data on a resource indicated by the scheduling information.

9. The method according to claim 2, wherein the second indication information is contained in the paging message, a system message, or an RRCRelease message.

10. The method according to any one of claims 1 to 9, wherein the resource other than the SDT resource comprises: a 4-step random access (RA) resource or a 2-step RA resource.

11. A paging response method, comprising:
transmitting a paging message, where the paging message contains first indication information, and the first indication information indicates execution of mobile terminated-small data transmission (MT-SDT); and
receiving a paging response message on a resource other than an SDT resource.

12. The method according to claim 11, further comprising:
transmitting second indication information, wherein the second indication information indicates that paging response is supported on the resource other than the SDT resource.

13. The method according to claim 11 or 12, wherein receiving the paging response message on the resource other than the SDT resource comprises:
receiving the paging response message on the resource other than the SDT resource in a case where there is no available SDT resource.

14. The method according to claim 13, wherein no available SDT resources comprises that:
no SDT resource is configured by a network, or a configured SDT resource is unavailable.

15. The method according to claim 11, further comprising:
transmitting third indication information, wherein the third indication information indicates an SDT search space;
transmitting scheduling information on an SDT resource belonging to the SDT search space; and
receiving uplink data and/or transmitting downlink data on a resource indicated by the scheduling information.

16. The method according to claim 15, wherein transmitting the third indication information comprises:
transmitting the third indication information in a case where no SDT resource is configured.

17. The method according to claim 12, wherein the second indication information is contained in the paging message, a system message, or a radio resource control release (RRCRelease) message.

18. The method according to any one of claims 11 to 17, wherein the resource other than the SDT resource comprises: a 4-step RA resource or a 2-step RA resource.

19. A communication device, comprising a receiving unit and a transmitting unit, wherein
the receiving unit is configured to receive a paging message, wherein the paging message contains first indication information, and the first indication information indicates execution of mobile terminated-small data transmission (MT-SDT); and
the transmitting unit is configured to transmit a paging response message on the resource other than the SDT resource.

20. A communication device, comprising a transmitting unit and a receiving unit, wherein
the transmitting unit is configured to transmit a paging message, wherein the paging message contains first indication information, and the first indication information indicates execution of mobile terminated-small data transmission (MT-SDT); and
the receiving unit is configured to receive a paging response message on a resource other than an SDT resource.

21. A communication device, comprising a processor;
the processor being configured to execute the method according to any one of claims 1 to 10 or 11 to 18.

22. A chip, wherein the chip is configured to execute the method according to any one of claims 1 to 10 or 11 to 18.

23. A chip module, wherein the chip module comprises a communication interface and a chip, wherein the communication interface is configured for internal communication within the chip module, or for the chip module to communicate with an external device; the chip is configured to execute the method according to any one of claims 1 to 10 or 11 to 18.

24. A computer-readable storage medium, wherein the computer-readable storage medium stores a computer program, the computer program contains program instructions, and the program instructions are executed by a communication device to perform the method according to any one of claims 1 to 10 or 11 to 18.
